# EUROPEAN PATENT APPLICATION

(11) **EP 3 597 722 A1**
(43) Date of publication of application: **22.01.2020**
(21) Application number: 18184267.5
(22) Date of filing: 18.07.2018
(51) Int. Cl.: C09K 11/02

(54) **AN ELECTRO-LUMINESCENT DEVICE-USING LAYER OF PHOTO-EMISSIVE QUANTUM DOTS ENCAPSULATED INTO COMPARTMENTALIZED POLYMERIC NANO-VESICLES**

(71) Applicant: SABIC Global Technologies B.V., 4612 PX Bergen op Zoom (NL)
(72) Inventor: FARAH, ABDIAZIZ A., 23955-6900 Thuwal (SA)
(74) Representative: Elzaburu S.L.P.

(57) **Abstract**

An electroluminescent thin film device may comprise an optically transparent electrode layer, a dielectric layer, and a photo-emissive layer disposed between the optically transparent electrode layer and the dielectric layer, wherein the photo-emissive layer comprises a plurality of stable quantum dots encapsulated in one or more cavities of an amphiphilic block copolymer.

## Description

### FIELD OF THE DISCLOSURE

The present disclosure relates to quantum dot technology, and in particular to a device including encapsulated photo-emissive nanoclusters.

### BACKGROUND OF THE DISCLOSURE

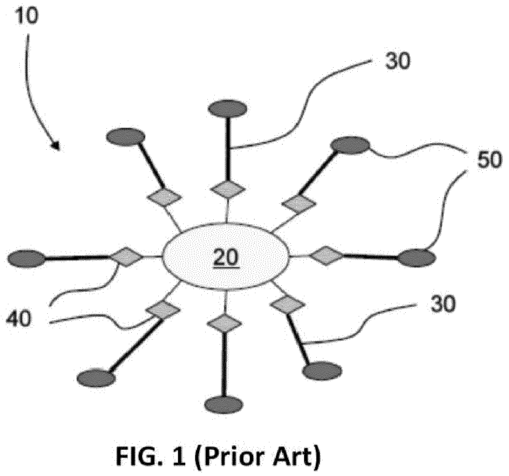

Quantum dots are used in various applications, including optical and display applications. As shown in FIG. 1, a typical quantum dot structure 10 includes a quantum dot 20 surrounded by ligands 30 that prevent aggregation and hence good dispersion in a polymer matrix in which the quantum dot structure 10 is included. In certain quantum dot structures 10 the ligands 30 are long chain alkyl/alkylaryl groups with donor atoms 40 and a reactive functional group 50. The donor atoms 40 form bonds with the quantum dot 20 and the reactive functional groups 50 and help to retain the quantum dot-ligand complex in the polymer matrix in which the quantum dot structure 10 is included. In particular applications the quantum dot structure 10 forms a part of a quantum dot enhancement film (QDEF). The quantum dot structure 10 described herein, however, does not protect the quantum dot 20 and articles (e.g., a QDEF) including the quantum dot structure 10 from air and moisture. Instability of the quantum dot structure 10 from air and moisture affects the optical properties of the quantum dot structure 10 and articles (e.g., a QDEF) including the quantum dot structure, making it not suitable for display applications.

The surface structures of water-soluble QDs are complex entities in solution. Its structure is apt to be influenced by the surface environment of QDs because of the very large surface-to-volume ratio and abundant bare atoms on their surfaces. Surface passivated QDs, by virtue of their stable and bright photoluminescence, have found a great deal of attention in both synthesis methodologies and inherent wide range of applications in the biological and biomedical areas. Despite significant progress and maturity in such areas, QD-based technologies in solid lighting are still facing great challenges, especially in the area of display technology, notably for the deployment of solution processed, cost-effective and scalable QLEDs.

Therefore, improvements are needed.

### BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1 is a representation of a prior art quantum dot structure.
FIG. 2 is a schematic representation of an alternating current (AC) electroluminescent thin film device with photo-emissive capacitor (PEC) display assembled via a successive screen printing process.
FIG. 3A illustrates a core-shell structure of CdTe QDs with molecular structures of used stabilized ligands.
FIG. 3B illustrates example bi-functional stabilizing ligands.
FIG. 3C illustrates a polystyrene-B-polymethacrylic acid (PS-b-PMAA) copolymer structure.
FIG. 3D illustrates absorption spectra profiles of CdTe QDs stabilized with different ligands.
FIG. 3E illustrates emission spectra profiles of CdTe QDs stabilized with different ligands.
FIG. 4 illustrates (PS-b-PMAA) diblock vesicle aggregate formation and an example CdTe QD encapsulation procedure.
FIG. 5A-5B illustrate scanning electron microscope (SEM) images of (PS-b-PMAA) diblock spherical micelles before water addition.
FIG. 5C-5D illustrate a (PS-b-PMAA) diblock spherical vesicle after 15% and 5% water addition, respectively.
FIG. 6A illustrates Atomic Force Microscopy (AFM) images of (PS-b-PMAA) diblock vesicles after 15% water addition.
FIG. 6B illustrates an enlarged SEM image of (PS-b-PMAA) diblock vesicles after 15% water addition.
FIG. 6C illustrates a TEM image of (PS-b-PMAA) diblock vesicles with a dilute CdTe QDs water solution.
FIG. 7 illustrates an example screen-printing stab for the fabrication of multilayer AC EL thin film devices.
FIG. 8A illustrates photoluminescence (PL) profiles of TGA stabilized CdTe QDs at different reaction times.
FIG. 8B illustrates TEM of TGA stabilized CdTe QDs (2h).
FIG. 8C illustrates TEM of TGA stabilized CdTe QDs (1h).
FIG. 8D illustrates light out of an AC EL of TGA stabilized CdTe QDs (2h).
FIG. 8E illustrates light out of an AC EL of TGA stabilized CdTe QDs (1h).
FIG. 9A illustrates an AC electroluminescence profile of TGL stabilized CdTe QDs and (PS-b-PMAA) lamp.
FIG. 9B illustrates a pictorial image of the TGL stabilized CdTe QDs and (PS-b-PMAA) lamp.
FIG. 9C illustrates an AC EL light out of the TGL stabilized CdTe QDs and (PS-b-PMAA) lamp.

### SUMMARY

In the present disclosure, an electroluminescent thin film device may comprise an optically transparent electrode layer, a dielectric layer, and a photo-emissive layer disposed between the optically transparent electrode layer and the dielectric layer, wherein the photo-emissive layer comprises a plurality of stable quantum dots encapsulated in one or more cavities of an amphiphilic block copolymer.

In an example aspect, to achieve bright and stable luminescent quantum dots, it may be necessary to prevent non-radiative recombination pathways associated with electron or hole trapping processes. The dangling bonds at the surface of quantum dots are the active preferred sites for such charge trapping events. Use of strong polymeric passivating heterostructures that provide core-shell type morphologies is a suitable approach to confine the electron and hole wave functions to the core of QDs and eliminate charge trapping at or near the QD surface. Herein, the effect of different capping ligands bearing different functional groups on the growth and photophysical properties of CdTe QDs were evaluated under identical experimental conditions. Furthermore, water nanoclusters were transferred into an organic phase media via the use of block copolymer nano-carriers with internalized void vesicle morphologies. The resulting organic phase friendly hybrid nanocomposites were then used to fabricate a multilayer AC electroluminescent thin film device with photo-emissive capacitor (PEC) display structure using a simple, cost-effective and scalable screen-printing approach.

### DETAILED DESCRIPTION

The present disclosure can be understood more readily by reference to the following detailed description of the disclosure and the Examples included therein. In various aspects, the present disclosure pertains to an electroluminescent thin film device that may comprise an optically transparent electrode layer, a dielectric layer, and a photo-emissive layer disposed between the optically transparent electrode layer and the dielectric layer, wherein the photo-emissive layer comprises a plurality of stable quantum dots encapsulated in one or more cavities of an amphiphilic block copolymer.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; and the number or type of embodiments described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the embodiments "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a quantum dot" includes mixtures of two or more quantum dots.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly, stated to be such. It is understood that where "about" is used before a quantitative value, the parameter also includes the specific quantitative value itself, unless specifically stated otherwise.

As used herein, the terms "optional" or "optionally" means that the subsequently described event or circumstance can or cannot occur, and that the description includes instances where said event or circumstance occurs and instances where it does not. For example, the phrase "optional additional additives" means that the additional additives can or cannot be included.

Disclosed are the components to be used to prepare the compounds of the disclosure as well as the compounds themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compounds of the disclosure. Thus, if there are a variety of additional steps that can be performed it is understood that each of these additional steps can be performed with any specific aspect or combination of aspects of the methods of the disclosure.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compounds disclosed herein have certain functions. Disclosed herein are certain structural requirements for performing the disclosed functions and it is understood that there are varieties of structures that can perform the same function that are related to the disclosed structures, and that these structures will typically achieve the same result.

### Device structure and functionality:

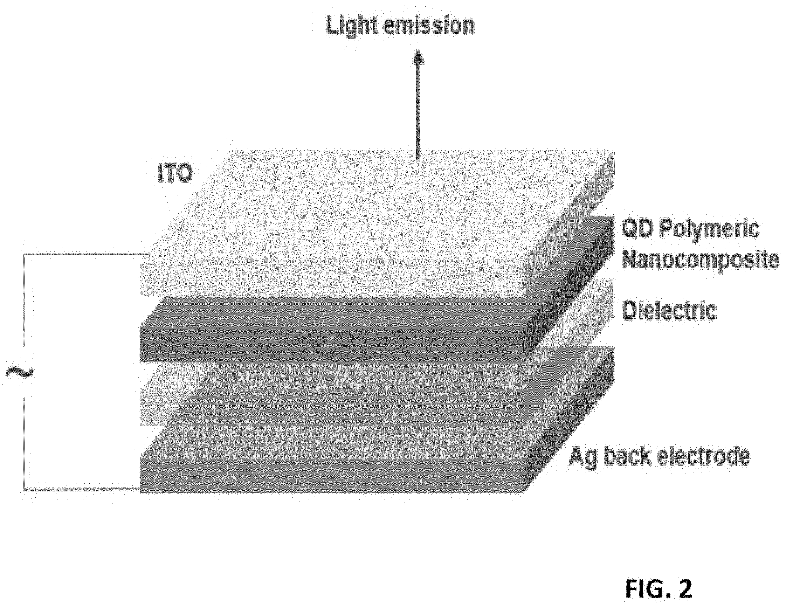

An AC electroluminescent thin film device with photo-emissive capacitor (PEC) display segment may be constructed as shown in (**FIG. 2**). The electroluminescent thin film device may comprise a parallel plate capacitor having one optically transparent electrode and a photo-emissive film between it and the dielectric layer. The photo-emissive film, as an example, may comprise tightly encapsulated quantum dots within a nano cavitated (PS-b-PMAA) block copolymer, which may be approximately 30 microns thick, doped with copper (Cu²⁺ ) ions. However, other materials, doping agents, and thickness may be used. The electroluminescent thin film device may comprise a transparent electrode such as indium tin oxide (ITO) and a dielectric, which may be approximately 33 microns thick. However, other materials and thicknesses may be used. For example, the transparent electrode may comprise indium tin oxide, gallium doped zinc oxide, aluminum doped zinc oxide, or fluorine doped tin oxide, or a combination thereof. Further, in some aspects the dielectric layer may comprise barium titanate (BaTiO₃), strontium titanate (SrTiO₃), or a combination thereof.

In certain aspects the PS-b-PMAA block copolymer includes PS₂₇₅-B-PMAA₈₅.

The capacitor of the electroluminescent thin film device may be charged to about 160 V, thus supporting an electric field of 2.5 X 106 V/m². However other charges and fields may be supported. The externally applied field may then be suddenly reversed, thereby discharging the capacitor and recharging it with the opposite polarity. During this repolarization, the electrons in the semi conductive QDs may collide with the dopant ions with sufficient energy to ionize them. The ionized impurity quickly extracts an electron from the conduction band of the QDs putting it in a metastable electronically excited state, which subsequently relaxes to the ground state photo-emissively. Thus, current is passed and light is emitted only during those brief repolarization periods, lasting typically a few microseconds. PEC lamps are operated at frequencies ranging from about 100 Hz to a kilohertz or higher. The printing and the deposition of the stacked layers of the device are achieved using the pictorial printing stab shown in (**FIG. 2**)

The electroluminescent thin film device and methods of making according to aspects of the present disclosure may reduce the capital cost. Sequential deposition of multilayered stacks of different films may be accomplished with minimum interface mixing. Multiple printing (e.g., screen-printing) runs may be used with clear and sharp definition of all prints (very important in circuit design for optoelectronic applications). In particular, screen-printing may in some aspects allow for successive deposition of different layers in the device without intermixing at the interface of the layers. Such processes are compatible with many inks, durable and with long lasting prints. Washing, drying or evasive processing steps may not be required.

### CdTe QDs selection

Reference is made herein to cadmium telluride (CdTe) QDs. However, it is understood that other QDs may be used. Certain QDs, such as CdTe QDs, may exhibit narrow and tunable absorption and emission bands and may exhibit desirable reaction time, reflux temperature, type of stabilizing ligands for a given application, as would be appreciated by one of skill in the art. Certain QDs, such as CdTe QDs, may exhibit luminescence with a wide range of energy conditions (e.g., variable peak positions across a spectrum of wavelengths (500-630 nanometers (nm)). Certain QDs, such as CdTe QDs, may exhibit excellent photo stability (e.g., immune of broadening during polymer encapsulation and/or a narrow full width half maximum (FWHM) line. Moreover, the QDs selected in accordance with the present disclosure may be solution/water processable.

### Nano cavitated (PS-b-PMAA) block morphologies

Reference is made herein to PS-b-PMAA block copolymers exhibiting nano-cavities. However, other materials (e.g., polymers) may be used and may exhibit nano-cavities that may be functional in the manners described herein. Nano-cavitated (PS-b-PMAA) block offer control over the diffusion of reagents (QDs) into the micelles and/or capability of tethering coordinating ligands/moieties into to the polymer cavities irreversibly. In some aspects the PS-b-PMAA block copolymer is PS₂₇₅-B-PMAA₈₅.

Block copolymer nano-carriers provide nano-engineered multiple binding sites for simultaneous interactions with QDs. Block copolymer nano-carriers provide less agglomeration of the adsorbed QDs (excellent encapsulating and good dispersion capacity media). As an illustrative example, the critical micelle concentration (CMC) of block copolymers is typically smaller than common surfactants or liposomes. Nano-cavitated (PS-b-PMAA) block offer control of micelle stability, polymer concentration, temperature, and solvent (tailorable materials processing parameters). Nano-cavitated (PS-b-PMAA) block offer less processing steps to achieve multi-layered adsorption of QDs. Cavitated (PS-b-PMAA) block micelles/vesicles offer control of the micelle size/morphologies through manipulation of molecular weight composition, chemistry/process, and choice of solvent as well as molecular architecture. QDs can be confined or attached to specific loci of the block copolymer/core/shell.

### Materials fabrication and processing:

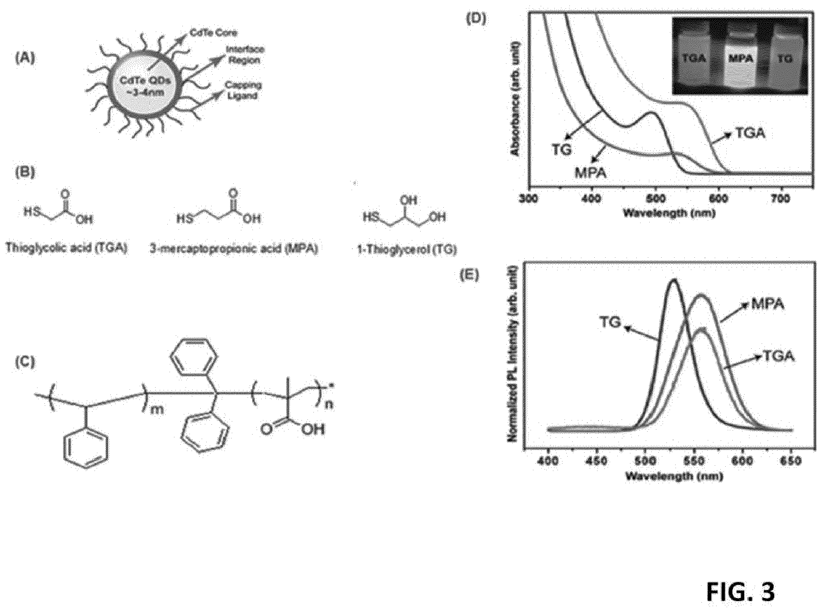

**Polystyrene-B-polymethacrylic acid (PS-b-PMAA) diblock structures:** PS₂₇₅-B-PMAA₈₅ copolymer structures used in this study are shown, for example, in (**FIG. 3**). However, other structures may be used. As shown, the copolymers were synthesized with minor modifications following a literature procedure by (Russel et.al. Macromolecules 2002, 35, 4271-4276) with the relative volume fraction of each copolymer maintained at a ratio of about 70:30. The CdTe stabilized different with different structures are shown in (**FIG. 3**). Materials were obtained as described in (Farah, A. A et al. ACS NANO 2011, 5, 3822-3830).

**(PS-b-PMAA) diblock vesicle formation protocols:** Solution self-assembly of amphiphilic (PS₂₇₅-B-PMAA₈₅) block copolymers into diverse micelle morphologies, including spheres and vesicles, may be utilized in the present disclosure. In particular, PS-b-PMAA block copolymer vesicles offer a structure of a robust internal aqueous bilayer-encapsulating compartment, which makes them excellent candidates as nanoscale carriers. In this instance, it is an excellent carrier platform to transfer water soluble CdTe QDs into an organic phase for further processing and fabrication of a photo-emissive display device. In general, block copolymer vesicles production requires stringent diblock copolymer structural and morphology requirements to be met, and has mainly relied on optimizing processing chemical conditions, block copolymer composition, choice of solvent, water content and many others in order to fine-tune intermolecular forces required for specific self-assembled morphology outcome.

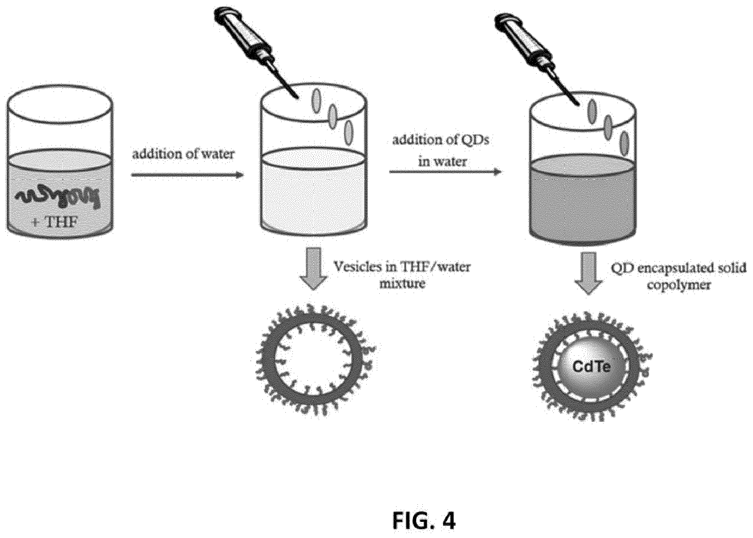

**(PS-b-PMAA) diblock vesicle aggregate:** The characteristics and composition of (PS₂₇₅-B-PMAA₈₅) diblock used in the present disclosure are shown in (**FIG. 4**). As shown, (PS-b-PMAA) diblock was dissolved in THF to make solutions with a concentration of 0.5-5 wt %. The solutions were stirred for 5 hours (h). To induce self-assembly, deionized water was added dropwise to the solution at a rate of 0.2 wt % per minute to the desired water content. The solutions were stirred for 3 h and were then quenched into an excess of water before they were dialyzed against water to remove the remaining THF. In some cases, the dialyzed aggregate solutions were freeze-dried for at least 48 h under vacuum. The resulting powder was re-dissolved in water to make a solution with a concentration of ca. 1.0 x 10⁻⁴ grams per milliliter (g/mL) for further analysis. The samples were stored at room temperature for further experiments if required. The rest of solution vesicles were quenched by the addition of dilute CdTe QDs solutions and collected by filtration.

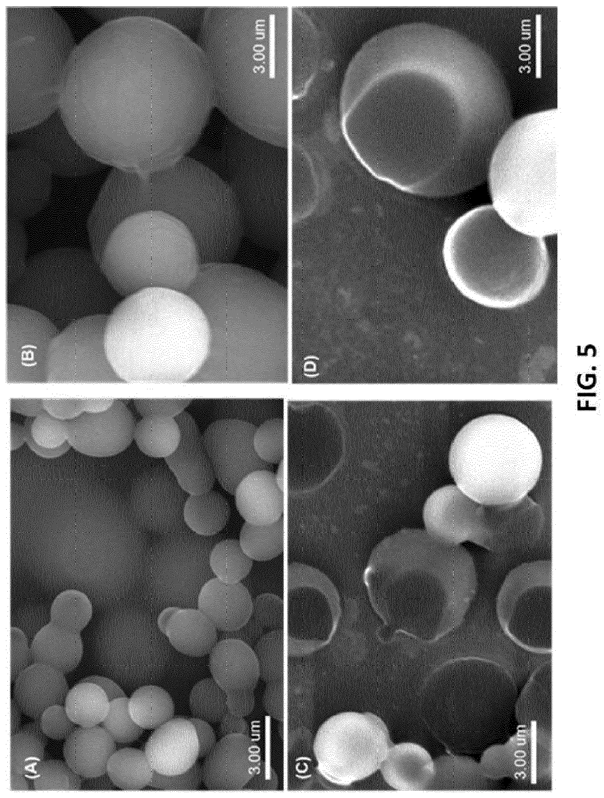

SEM images of a (PS₂₇₅-B-PMAA₈₅) diblock specimen taken at different stages of self-assembling process as shown in (**FIG. 5**) revealed that there is an aggregate morphology change from spheres to vesicles as the water content is increased. Spheres were the only morphology seen (**FIG. 5A-5B**) when most likely all available carboxyl functional groups in the MAA content of (PS-b-PMAA) diblock are fully protonated. Both spheres and vesicles morphologies coexisted as the degree of ionization of the MAA content gradually increased (**FIG. 5C**) and, finally vesicles were the only morphology present when the MAA content is in fully hydrolyzed state (**FIG. 5D**). One plausible explanation mechanism of this observed morphological change is, most likely, the partial accumulation of the hydrophobic PS component initially at the center of the sphere, which reduces the stretching of the core chains, which, in turn, can convert vesicles or rods into spheres. When the MAA content is fully hydrolyzed, the PS block chains may no longer be confined to the core of the aggregates. The hydrophilicity of the COOH group on the MAA chains of (PS-b-PMAA) diblock becomes relevant and makes its localization at the interface more likely with increasing COOH content.

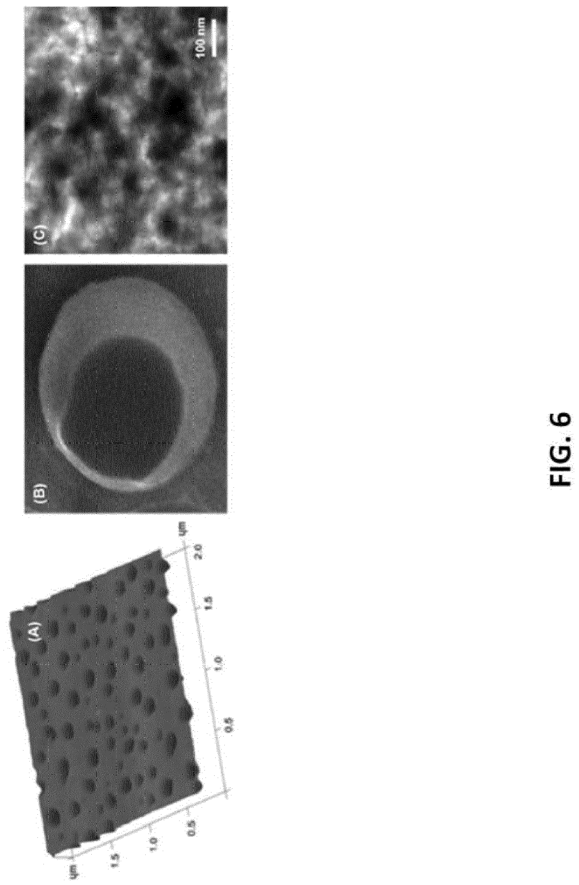

AFM images of highly hydrolyzed (PS₂₇₅-B-PMAA₈₅) diblock vesicles as in (**FIG. 6A**) clearly displayed nano-cavitated morphologies of almost comparable sizes (e.g., 5-15 nm) holes across the film. An enlarged SEM image of the same specimen (**FIG. 6B**) also revealed similar surface cavity morphology in agreement with the AFM data. After securing the expected vesicle structure formation during the amphiphilic (PS-b-PMAA) diblock self-assembling process, it was then added slowly dilute CdTe QDs solution while stirring vigorously. Following repetitive dissolution/precipitation cycles with THF/water, the result was an organic media of processable CdTe QDs encapsulated with amphiphilic (PS-b-PMAA), which may be suitable for use in an AC EL photo-emissive device in some aspects. A microtomed TEM image of such hybrid material is shown in **FIG. 6C****.** It shows void holes of the amphiphilic (PS-b-PMAA) vesicle are now filled with high contrast CdTe QDs nanocluster as expected.

In the present disclosure, it is shown that nanocavitated (PS-b-PMAA) can successfully entrap and stabilize CdTe QDs in water over longer periods and concomitantly can transfer it into organic media. Different ligand stabilized CdTe QDs with tunable absorption and emission bands, bright luminescence and exceptional photo stability along with (PS-b-PMAA) block copolymer with narrow (MWD) were utilized in this study. This unique block copolymer under controlled micelle formation process offered very intricate micelle/vesicle morphology transition with compartmentalized reactive cavities of controlled sizes, capable of encapsulating CdTe QDs. A selective decoration of CdTe QDs in a phase-separated block copolymer system as demonstrated herein can provide a variety of structures having a good spatial distribution of such nanoparticles in a block copolymer matrix. It is also demonstrated for the first time the realization of robust but simple fabrication protocols of deploying solution processable hybrid organic inorganic nanocomposites for potential optoelectronic applications.

### Articles of Manufacture

In some aspects the article is a film or layer for an optical device (e.g., a light emitting device), a solar panel laser or other suitable application. In other aspects the article is a photoelectric element, such as but not limited to a quantum dot film color film, a backlight source, a sheet polarizer, a luminescent layer and a photoelectric converting device. In still other aspects the article is a photoelectric device that has a lighting or display function, including but not limited to a lighting device, a liquid crystal display panel, an electronic paper, an organic electroluminescent display (OLED) panel, a mobile phone, a tablet computer, a TV set, a display, a notebook computer and a digital photo frame and navigator. In a particular aspect the article is a quantum dot enhancement film (QDEF).

Various combinations of elements of this disclosure are encompassed by this disclosure, e.g., combinations of elements from dependent claims that depend upon the same independent claim.

### Photo-emissive device fabrication protocols:

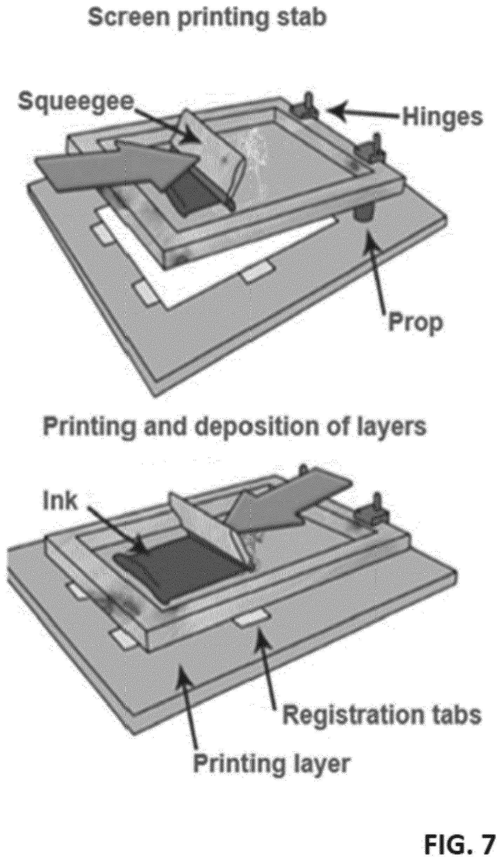

In an example aspect, AC thin-film electroluminescent lamps may be fabricated using various printing technologies, such as by screen-printing technology (**FIG. 7**). As a further example, 200 milligram (mg) of nanocluster was suspended in 1 milliliter (mL) of Dupont Luxprint 8155 screen printing vehicle. This is a thermally crosslinkable hydrophobic fluoropolymer. The suspension was then screen-printed onto 7 mil thick heat-stabilized ITO sputter coated polyester (PET) having a resistivity of 100 Ohms per square (Ω/square), then thermally crosslinked at 160 degrees Celsius (°C) for 10 minutes in a box oven. A dielectric layer was then printed over the nanocluster film through #305/30 mesh screen to a total thickness of 22 micron (µm). The dielectric was prepared by suspending barium titanate in TGH 1018 UV curable screen-printing vehicle. A back electrode was then printed from colloidal silver in UV curable screen-printing vehicle to a thickness of 18 µm. All layers were crosslinked under a Vitran 300 watt (W) mercury vapor lamp.

**AC Thin-Film Electroluminescence:** The ACTFEL lamps were energized by a custom made Z940 Short-Pulse ACTFEL driver. This device produces 20 µs pulses of alternating polarity at 1250 hertz (Hz) and 160 volts (V).

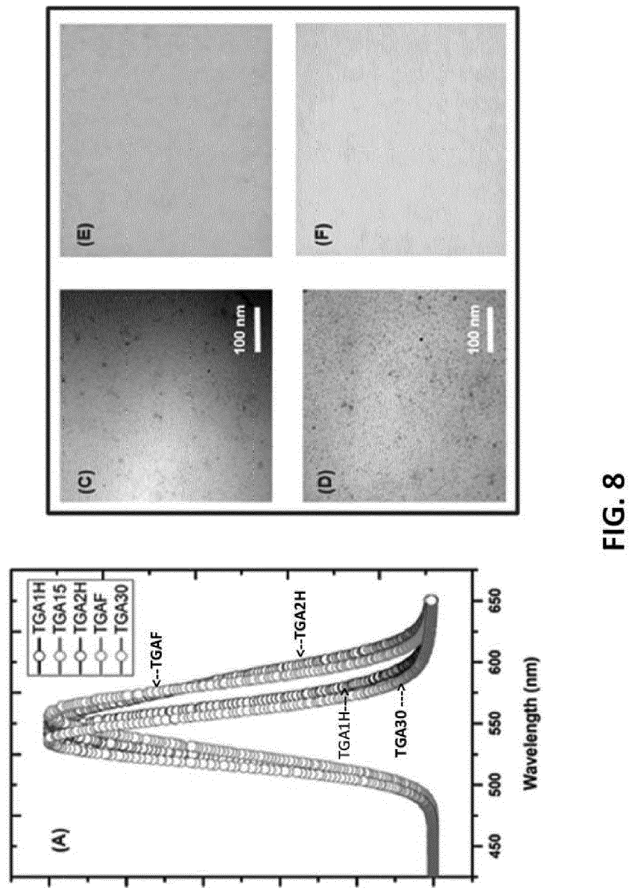

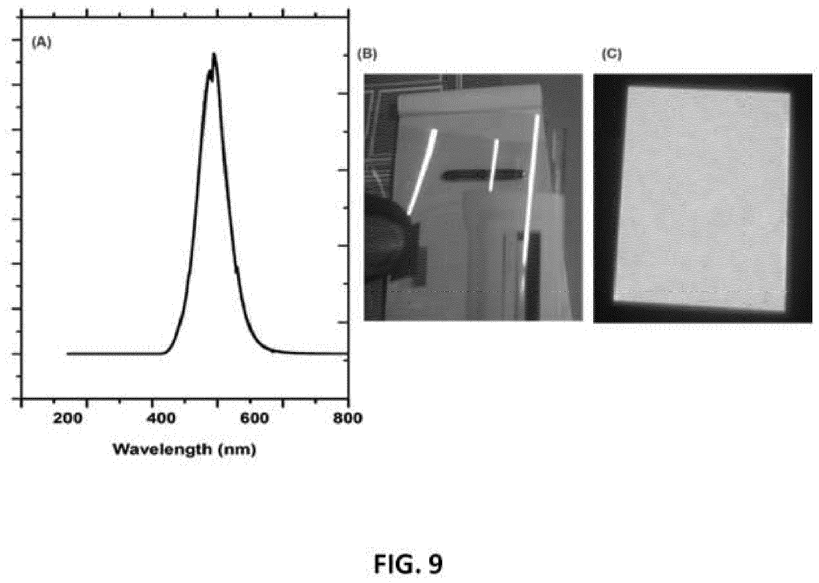

**AC Impedance Measurements:** Values for equivalent circuit parameters were determined using a B&K model 885 RC network analyzer. The equivalent circuit for an ACTFEL lamp can be represented as a series RC with a resistive shunt across the capacitor to account for DC leakage. The DC pathway has a resistance on the order of Giga-ohms, and can thus be ignored. The specific capacitance for the lamps was typically 230 picofarads per centimeter (pF/cm⁻), and the series resistivity was 900 Ohm-centimeters (Ω cm). This model allows a simple analysis of energy consumption. In a series RC network, power is dissipated only by the resistive component, whereas non-dissipative energy is stored by the capacitive component. The RC time constant of this device is simply, τ = γρ, where γ is the specific capacitance and ρ is the resistivity. Thus, for our lamps, τ = 210 nanoseconds (ns). The capacitor therefore is essentially fully charged/discharged in approximately 5τ or 1 µs, much less than the 20 µs pulses from the custom made Z940. Under such quasi-infinite time conditions, the power dissipated by the resistive component is dependent only on the value of the capacitor, P = fCV², where V is the pulse voltage and f is the pulse repetition frequency. In (**FIG. 8A**) it is shown the AC electroluminescence thin film profile of device constructed from TGL stabilized CdTe QDs and (PS-b-PMAA) diblock vesicles. It clearly demonstrated that neither the PL peak position of TGL stabilized CdTe QDs nor the FWHM of its spectrum profile changed after the polymer matrix encapsulation. It is worthwhile to mention that the smaller the CdTE QDs embedded in the polymer matrix and with good dispersion state, the brighter the AC electroluminescent thin film light output of the corresponding device. (**FIG. 9B - 9C**) are shown representative pictorial image of the TGL stabilized CdTe QDs and (PS-b-PMAA) lamp and AC EL light out of the same device.

As described herein, nanocavitated (PS-b-PMAA) can successfully entrap and stabilize CdTe QDs in water over longer periods and concomitantly can transfer it into organic media. Different ligand stabilized CdTe QDs with tunable absorption and emission bands, bright luminescence and exceptional photo stability along with (PS-b-PMAA) block copolymer with narrow (MWD) were utilized in this study. This unique block copolymer under controlled micelle formation process offered very intricate micelle/vesicle morphology transition with compartmentalized reactive cavities of controlled sizes, capable of encapsulating CdTe QDs. A selective decoration of CdTe QDs in a phase-separated block copolymer system as demonstrated herein can provide a variety of structures having a unique spatial distribution of such nanoparticles in smart block copolymer matrix. It is also accomplished for the first time simple AC electroluminescent thin film device fabricated from this hybrid system and their potential application as electronic and optically active materials.

### Aspects of the Disclosure

In various aspects, the present disclosure pertains to and includes at least the following aspects.

Aspect 1: An electroluminescent thin film device comprising:
an optically transparent electrode layer; a dielectric layer; and
a photo-emissive layer disposed between the optically transparent electrode layer and the dielectric layer,
wherein the photo-emissive layer comprises a plurality of stable quantum dots encapsulated in one or more cavities of an amphiphilic block copolymer.

Aspect 2: The electroluminescent thin film device of aspect 1, wherein the optically transparent electrode layer comprises indium tin oxide, gallium doped zinc oxide, aluminum doped zinc oxide, or fluorine doped tin oxide, or a combination thereof.

Aspect 3: The electroluminescent thin film device of any one of aspects 1-2, wherein the dielectric layer comprises barium titanate, or strontium titanate, or a combination thereof.

Aspect 4: The electroluminescent thin film device of any one of aspects 1-3, wherein the amphiphilic block copolymer comprises polystyrene-B-polymethacrylic acid (PS-b-PMAA) block copolymers.

Aspect 4A: The electroluminescent thin film device of aspect 4, wherein the polystyrene-B-polymethacrylic acid (PS-b-PMAA) block copolymer comprises PS₂₇₅-B-PMAAss.

Aspect 5: The electroluminescent thin film device of any one of aspects 1-4A, wherein the plurality of stable quantum dots comprise CdTe quantum dots.

Aspect 6: The electroluminescent thin film device of any one of aspects 1-5, wherein the plurality of stable quantum dots comprise capped nanoparticles.

Aspect 7: The electroluminescent thin film device of aspect 6, wherein the capped nanoparticles are capped with at least one thiol and a hydroxyl or carboxyl group comprising TGA, MPA or TGA.

Aspect 8: The electroluminescent thin film device of any one of aspects 1-7, wherein the cavities are capable of receiving quantum dots having a size of between 3nm and 5nm.

Aspect 9: The electroluminescent thin film device of any one of aspects 1-8, wherein the cavities have a size of between 5nm and 15nm.

Aspect 10: The electroluminescent thin film device of any one of aspects 1-9, wherein the stable quantum dots are water processable.

Aspect 11: The electroluminescent thin film device of any one of aspects 1-10, further comprising a photo-emissive capacitor (PEC) display segment

Aspect 12: A method of preparing a electroluminescent device, the method comprising:
providing an amphiphilic block copolymer exhibiting one or more of micelle or vesicle morphology transition with cavities of controlled sizes;
encapsulating a plurality of stable quantum dots in one or more compartmentalized reactive cavities of the amphiphilic block copolymer, wherein the stable quantum dots are solution processable; and
fabricating an electro-luminescent device comprising:
   an optically transparent electrode layer;
   a dielectric layer; and
   a photo-emissive layer disposed between the optically transparent electrode layer and the dielectric layer,
   wherein the photo-emissive layer comprises the plurality of stable quantum dots encapsulated in the one or more cavities of the block copolymer.

Aspect 13: The method of aspect 12, wherein the amphiphilic block copolymer comprises polystyrene-B-polymethacrylic acid (PS-b-PMAA) block copolymers.

Aspect 13A: The method of aspect 13, wherein the polystyrene-B-polymethacrylic acid (PS-b-PMAA) block copolymer comprises PS₂₇₅-B-PMAA₈₅.

Aspect 14: The method of any one of aspects 12-13A, wherein the plurality of stable quantum dots comprise CdTe quantum dots.

Aspect 15: The method of any one of aspects 12-14, wherein fabricating comprises screen printing, inkjet printing, spray coating, dip coating, or a combination thereof.

Aspect 16: A method of preparing a electroluminescent device, the method comprising:
providing an amphiphilic block copolymer exhibiting one or more of micelle or vesicle morphology transition with cavities of controlled sizes;
encapsulating a plurality of stable quantum dots in one or more compartmentalized reactive cavities of the amphiphilic block copolymer, wherein the stable quantum dots are solution processable; and
screen printing an electro-luminescent device comprising:
   an optically transparent electrode layer;
   a dielectric layer; and
   a photo-emissive layer disposed between the optically transparent electrode layer and the dielectric layer,
   wherein the photo-emissive layer comprises the plurality of stable quantum dots encapsulated in the one or more cavities of the block copolymer.

Aspect 17: The method of aspect 16, wherein the amphiphilic block copolymer comprises polystyrene-B-polymethacrylic acid (PS-b-PMAA) block copolymers.

Aspect 17A: The method of aspect 17, wherein the polystyrene-B-polymethacrylic acid (PS-b-PMAA) block copolymer comprises PS₂₇₅-B-PMAA₈₅.

Aspect 18: The method of any one of aspects 16-17A, wherein the plurality of stable quantum dots comprise CdTe quantum dots.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the invention should be determined with reference to the appended claims, along with the full scope of equivalents to which such claims are entitled.

## Claims

1. An electroluminescent thin film device comprising:
an optically transparent electrode layer;
a dielectric layer; and
a photo-emissive layer disposed between the optically transparent electrode layer and the dielectric layer,
wherein the photo-emissive layer comprises a plurality of stable quantum dots encapsulated in one or more cavities of an amphiphilic block copolymer.

2. The electroluminescent thin film device of claim 1, wherein the optically transparent electrode layer comprises indium tin oxide, gallium doped zinc oxide, aluminum doped zinc oxide, or fluorine doped tin oxide, or a combination thereof.

3. The electroluminescent thin film device of any one of claims 1-2, wherein the dielectric layer comprises barium titanate or strontium titanate, or a combination thereof.

4. The electroluminescent thin film device of any one of claims 1-3, wherein the amphiphilic block copolymer comprises polystyrene-B-polymethacrylic acid (PS-b-PMAA) block copolymers.

5. The electroluminescent thin film device of any one of claims 1-4, wherein the plurality of stable quantum dots comprise CdTe quantum dots.

6. The electroluminescent thin film device of any one of claims 1-5, wherein the plurality of stable quantum dots comprise capped nanoparticles.

7. The electroluminescent thin film device of claim 6, wherein the capped nanoparticles are capped with at least one thiol and a hydroxyl or carboxyl group comprising TGA, MPA or TGA.

8. The electroluminescent thin film device of any one of claims 1-7, wherein the cavities are capable of receiving quantum dots having a size of between 3nm and 5nm.

9. The electroluminescent thin film device of any one of claims 1-8, wherein the cavities have a size of between 5nm and 15nm.

10. The electroluminescent thin film device of any one of claims 1-9, wherein the stable quantum dots are water processable.

11. The electroluminescent thin film device of any one of claims 1-10, further comprising a photo-emissive capacitor (PEC) display segment.

12. A method of preparing a electroluminescent device, the method comprising:
providing an amphiphilic block copolymer exhibiting one or more of micelle or vesicle morphology transition with cavities of controlled sizes;
encapsulating a plurality of stable quantum dots in one or more compartmentalized reactive cavities of the amphiphilic block copolymer, wherein the stable quantum dots are solution processable; and
fabricating an electro-luminescent device comprising:
an optically transparent electrode layer;
a dielectric layer; and
a photo-emissive layer disposed between the optically transparent electrode layer and the dielectric layer,
wherein the photo-emissive layer comprises the plurality of stable quantum dots encapsulated in the one or more cavities of the block copolymer.

13. The method of claim 12, wherein the amphiphilic block copolymer comprises polystyrene-B-polymethacrylic acid (PS-b-PMAA) block copolymers.

14. The method of any one of claims 12-13, wherein the plurality of stable quantum dots comprise CdTe quantum dots.

15. A method of preparing a electroluminescent device, the method comprising:
providing an amphiphilic block copolymer exhibiting one or more of micelle or vesicle morphology transition with cavities of controlled sizes;
encapsulating a plurality of stable quantum dots in one or more compartmentalized reactive cavities of the amphiphilic block copolymer, wherein the stable quantum dots are solution processable; and
screen printing an electro-luminescent device comprising: an optically transparent electrode layer; a dielectric layer; and a photo-emissive layer disposed between the optically transparent electrode layer and the dielectric layer, wherein the photo-emissive layer comprises the plurality of stable quantum dots encapsulated in the one or more cavities of the block copolymer.
